# EUROPÄISCHE PATENTSCHRIFT

(11) **EP 3 429 946 B1**
(45) Veröffentlichungstag und Bekanntmachung des Hinweises auf die Patenterteilung: **29.04.2020**
(21) Anmeldenummer: 17709621.1
(22) Anmeldetag: 02.03.2017
(51) Int. Cl.: B65G 21/22, B65G 43/02

(54) **BEHÄLTERBEHANDLUNGSANLAGE**
CONTAINER TREATMENT SYSTEM
INSTALLATION DE TRAITEMENT DE RÉCIPIENTS

(30) Priorität: 17.03.2016 DE 102016104977
(43) Veröffentlichungstag der Anmeldung: 23.01.2019
(73) Patentinhaber: KHS GmbH, 44143 Dortmund (DE)
(72) Erfinder: PAROTH, Berthold, 44289 Dortmund (DE)
(86) Internationale Anmeldenummer: PCT/EP2017/054939
(87) Internationale Veröffentlichungsnummer: WO 2017/157683

(56) Entgegenhaltungen:
- WO-A1-2015/111418
- DE-A1- 3 711 916
- JP-A- 2008 007 246
- US-A1- 2013 264 175
- US-A1- 2014 236 348
- US-A1- 2016 009 500

## Beschreibung

Die vorliegende Erfindung betrifft eine Behälterbehandlungsanlage umfassend wenigstens eine Förderanordnung für Behälter und/oder deren Verschlüsse, welche Förderanordnung wenigstens ein Endlosantriebselement aufweist, das mittels wenigstens einer Führung geführt ist und/oder auf einer Gleitleiste aufliegt bzw. auf dieser Gleitleiste gleitet. Es wird darauf hingewiesen, dass somit auch eine solche Gleitleiste eine Führung darstellt. Die Führung weist wenigstens einen gekrümmten Abschnitt mit einer Führungsfläche, gegen die das Endlosantriebselement und/oder die Aufnahmeelemente anliegt/en. Die Aufnahmeelemente können selbst das Endlosantriebselement bilden.

In dem Bereich eines gekrümmten Abschnitts einer Führung spricht man in der Regel von einer Kurvenführung. Wenn das Endlosantriebselement oder die Aufnahmeelemente in der Kurvenführung an der inneren Führungsfläche der Führung entlanggleitet(n), führt dies auf die Dauer zu einem Verschleiß der inneren Führungsfläche, der dazu führen kann, dass sich der Weg des Endlosantriebselements oder der Aufnahmeelemente zur Seite hin verändern kann. Dies kann letztendlich zu Fehlfunktionen der Behälterbehandlungsanlage führen.

Die Gleitleisten verschleißen im Laufe der Zeit, wobei deren Dicke abnimmt. Da die Position des Endlosantriebselementes auch durch seine Höhe im Raum oder relativ zu anderen Endlosantriebseelementen bestimmt wird, ändert sich diese Position mit dem Verschleiß der Gleitleisten, wodurch es ebenfalls Fehlfunktionen innerhalb der Behälterbehandlungsanlage kommen kann. Besonders häufig treten Fehlfunktionen durch den Verschleiß von Gleitleisten dann auf, wenn mehrere auf Gleitleisten gleitende Endlosantriebselemente parallel angeordnet sind, wobei die Gleitleisten unterschiedlich schnell verschleißen.

Ein Vorschlag zur vereinfachten Überwachung des Verschleißes von Gleitleisten und/oder Kurvenführungen wurde durch die US 2016/0009500 A1 vorgestellt.

Die von dieser Schrift vorgestellt Vorrichtung betrifft eine Kurvenführung für einen Kettenförderer, wobei in den Grundkörper dieser Kurvenführung zumindest ein optisch wirkender Verschleißindikator eingelassen ist. Mehr im Detail sieht diese Schrift vor, dass mit zunehmendem Verschließ des Grundkörpers kurveninnenseitig angeordnete Verschleißindikatoren durch die Förderkette zunehmend verdeckt werden, wohingegen kurvenaußenseitig angeordnete Verschleißindikatoren zunächst von der Förderkette verdeckt sind, bei zunehmenden Verschleiß des Grundkörpers aber zunehmend freigegeben werden, wodurch die Verschleißindikatoren zunehmend sichtbar werden.

Nachteilig an der Vorrichtung nach der US 2016/0009500 A1 ist, dass die vorgestellte Vorrichtung zur Feststellung von Verschleiß der optischen Inspektion durch das Bedienpersonal bedarf. Die vorgestellte Vorrichtung eignet sich nicht für eine automatische Überwachung des Verscheißens der Kurvenführung.

US 2014/0236348 A1 offenbart eine Anlage mit den Merkmalen des Oberbegriffs des Anspruchs 1.

Es ist daher Aufgabe der Erfindung, eine Behälterbehandlungsanlage zu schaffen, bei welcher Betriebsfehler aufgrund eines Verschleißes der Führung im Bereich von Krümmungen oder aufgrund des Verschleißes von Gleitleisten reduziert werden können. Diese Aufgabe wird durch eine Behälterbehandlungsanlage mit den Merkmalen des Anspruchs 1 gelöst. Vorteilhafte Weiterbildungen der Erfindung sind Gegenstand der abhängigen Ansprüche. Weitere vorteilhafte Ausführungsformen der Erfindung sind in der Beschreibung und in den Zeichnungen beschrieben, wobei in den Figuren keine Ausführungsbeispiele zu den Gleitleisten dargestellt sind.

Gemäß der erfindungsgemäßen Lösung der oben genannten Aufgabe weist die Behälterbehandlungsanlage wenigstens ein Markerelement auf. Dieses Markerelement kann beispielsweise in örtlich festgelegter Anordnung zum gekrümmten Abschnitt der Führung auf, welches Markerelement mit wenigstens einem Teil des Endlosantriebselements bzw. der Aufnahmeelemente zur Generierung eines Verschleißsignals zusammenwirkt. Dieses Markerelement ist derart neben dem Weg der Aufnahmeelemente angeordnet, dass es bei einem Verschleiß der Kurvenführung und einem entsprechenden seitlichen Versatz d der Aufnahmeelemente quer zur Förderrichtung wenigstens teilweise von den Aufnahmeelementen überdeckt oder von diesen freigelegt wird.

Für den erfindungsgemäßen Fall, dass das Markerelement ein Sensor ist, der an der Innenseite der Kurvenführung angeordnet ist, geraten die Aufnahmeelemente z.B. in den Erfassungsbereich des Sensors hinein. Somit kann durch die Behälterbehandlungsanlage eine derart starke Abnutzung der Kurvenführung, der zu einer Verschiebung des Führungsweges quer zur Bewegungsrichtung der Führung führt, sofort erkannt werden, worauf beispielsweise einer Steuerung der Behälterbehandlungsanlage ein Verschleißsignal zugeführt werden kann, welches durch einen Operator oder Wartungstechniker wahrgenommen werden kann, um die entsprechend abgenutzte Kurvenführung auszutauschen. Alternativ kann die Steuerung eine automatische Wartungsanforderung der Behälterbehandlungsanlage, z.B. über ein öffentliches Netzwerk absetzen, z.B. an ein Fernwartungszentrum. Die Erfindung ermöglicht es somit, eine abgenutzte Kurvenführungen rechtzeitig auszutauschen, bevor die Abnutzung so stark ist, dass aufgrund einer veränderten Kurvenbahn der Aufnahmeelemente im Bereich der Kurvenführung Fehlfunktionen der Behälterbehandlungsanlage auftreten können.

So sind zum Beispiel in der Behälterbehandlungsanlage die Positionen der Aufnahmeelemente und/oder der Endlosantriebselemente immer sehr genau definiert. Wenn diese im Bereich der Kurvenführung nun aufgrund einer starken Abnutzung seitlich, das heißt quer zum Bewegungspfad der Führung, verschoben sind, kann das beispielsweise dazu führen, dass das Endlosantriebselement seitlich an die Halter der dort üblicher Weise angeordneten Geländerführung gerät und dort Beschädigungen verursacht, bzw. selbst beschädigt wird.

In einem weiteren Ausführungsbeispiel ist das Markerelement als Sensor ausgebildet, der mit den Aufnahmeelementen und/oder dem Endlosantriebselement zusammenwirkt, zum Beispiel so, dass die Aufnahmeelemente bzw. das Endlosantriebselement entweder bei starker Abnutzung in den Erfassungsbereich des Sensors hineingeraten oder aus diesem herausfallen. Ersteres ist der Fall, wenn der Sensor an der Innenseite der Kurvenführung angeordnet ist, Letzteres ist der Fall, wenn der Sensor an der Außenseite der Kurvenführung angeordnet ist, da bei einer abgenutzten Kurvenführung ein Versatz des Endlosantriebselements bzw. der Aufnahmeelemente immer nach innen, das heißt zum Mittelpunkt der Krümmung der Kurvenführung, auftritt.

Selbstverständlich könnte es sich bei dem Markerelement auch lediglich um eine Markierung handeln, die bei zunehmendem Verschleiß der Kurvenführung durch das Endlosantriebselement verdeckt oder freigelegt wird. Auf diese Weise könnte Wartungspersonal sofort erkennen, dass die Kurvenführung über Gebühr abgenutzt ist. Ein derartiges Markerelement könnte zum Beispiel eine farbige Markierung sein oder irgendeine texturmäßig unterschiedliche Markierung, die sich von dem sonstigen Material der Führung bzw. Führungsschiene unterscheidet, zum Beispiel Löcher oder Bohrungen.

Auch könnten die verschleißenden Elemente, also beispielsweise die Kurvenführungen oder auch die Gleitleisten jeweils uns mindestens zwei verschiedenfarbigen Materialien gefertigt sein, oder aber aus einem Material in zwei verschiedenen Farben gefertigt sein.

Dabei ist weiterhin vorgesehen, dass die Schicht bzw. das Material, dass durch den fortschreitenden Verschleiß abgetragen wird, in einer ersten Farbe ausgeführt ist. Weiterhin ist vorgesehen, dass die Schicht, bzw. das Material welches nicht mehr verschleißen soll in einer zweiten Farbe ausgeführt ist. Vorteilhaft verdeckt das Material der ersten Farbe im Neuzustand, bzw. im noch gebrauchsfähigen Zustand der Vorrichtung zumindest teilweise das Material mit der zweiten Farbe. Durch fortschreitenden Verschleiß wird das Material der zweiten Farbe - in zunehmendem Maße - sichtbar, wodurch das Bedienungspersonal über das Erreichen des maximal zulässigen Verschleißes informiert wird.

Derartige Gleitleisten können beispielsweise durch schichtweisen Aufbau, oder aber auch durch paralleles Extrudieren eines Materials mit zwei verschiedenen Farben hergestellt werden.

Für den erfindungsgemäßen Fall, dass als Markerelement ein Sensor verwendet wird, hat dieser vorzugsweise einen definierten Erfassungsbereich quer zur Förderrichtung des Endlosantriebelements und der Sensor gibt ein Signal ab, das die Lage des Endlosantriebsförderelements oder der Aufnahmeelemente relativ zu dem Erfassungsbereich anzeigt. Auf diese Weise kann der Verlauf der Abnutzung der Kurvenführung als analoger Wert erfasst werden, das heißt, bevor ein Grenzwert in der Abnutzung vorliegt. Auf diese Weise kann das Abnutzungsverhalten der Kurvenführung im laufenden Betrieb der Behälterbehandlungsanlage erfasst werden. Vorzugsweise ist in diesem Fall der Sensor als Sensorarray mit einer Vielzahl von quer zur Förderrichtung nebeneinander angeordneten Sensorelementen ausgebildet. Auf diese Weise fallen die Aufnahmeelemente bzw. das Endlosantriebselement mit zunehmender Abnutzung mehr in den Erfassungsbereich hinein bzw. aus dem Erfassungsbereich hinaus, je nach Anordnung des Sensors an der Innenseite oder Außenseite der Kurvenführung.

Bei dem Sensor kann es sich beispielsweise um einen induktiven und/oder kapazitiven und/oder optischen Sensor handeln, wie sie dem Fachmann an sich bekannt sind.

Vorzugsweise ist der Sensor mit einer Steuerung der Behälterbehandlungsanlage verbunden, um auf den Betrieb der Behälterbehandlungsanlage einzuwirken oder um ein Wartungssignal für eine Überwachungseinheit, zum Beispiel die Steuerung der Behälterbehandlungsanlage, zu generieren. Auf diese Weise kann die Erfassung einer betriebsrelevanten Abnutzung einer Kurvenführung automatisch erfasst werden.

Hierfür kann zum Beispiel in der Steuerung der Behälterbehandlungsanlage eine Überwachungs- oder Auswerteeinheit angeordnet sein, welche den Verschleiß der Behälterbehandlungsanlage an unterschiedlichen Stellen, insbesondere an den Kurvenführungen der in der Behälterbehandlungsanlage angeordneten Förderanordnung, überwacht. Wenn die Überwachungs- oder Auswerteeinheit ein größeres flächiges Display hat, könnte automatisch der Ort der abgenutzten Kurvenführung in der Behälterbehandlungsanlage auf dem Display angezeigt werden, was es dem Wartungstechniker erleichtert, die abgenutzte Kurvenführung in der Behälterbehandlungsanlage zu finden. Vorzugsweise ist jedem Sensor einer Kurvenführung eine eigene ID zugeordnet, die zusammen mit dem Sensorsignal der Steuerung zugeleitet wird. Auf diese Weise kann der Ort der verschlissenen Kurvenführung in der Behälterbehandlungsanlage sofort verifiziert werden.

Vorzugsweise ist das Markerelement, insbesondere wenn es ein Sensor ist, in der Nähe des Endlosantriebselementes angeordnet, so dass auf einen Verschleiß hindeutende Verlagerungen des Endlosantriebselementes sicher erkannt werden können. Alternativ oder auch ergänzend kann auch vorgesehen sein, dass ein solches Markerelement in die Kurvenführung selbst integriert ist.

In einer vorteilhaften Weiterbildung der Erfindung besteht die Markierung in einer Vertiefung des Konstruktionselements, wie zum Beispiel einem Sackloch oder einer Bohrung. In diesem Fall kann in dem Sackloch oder in der Bohrung ein sich von dem Konstruktionselement unterscheidendes Material in der Vertiefung angeordnet werden. Ein derartiges Material kann zum Beispiel ein Material sein, das sich in seiner Haptik und/oder seiner Farbe von dem Material des Konstruktionselements, was üblicherweise Metall sein dürfte, unterscheidet.

Die erfindungsgemäße Behälterbehandlungsanlage kann als Behälterförderanlage, Behälterfüllanlage, Behälteretikettieranlage, Behälterreinigungsanlage und/oder Verpackungsanlage für die Behälter ausgebildet sein, natürlich selbstverständlich auch eine Anlage, die mehrere der oben genannten Behälterbehandlungskomponenten miteinander kombiniert.

Üblicherweise ist das Endlosantriebselement eine Förderkette, insbesondere Gliederkette, die an der Führungsfläche der Führung entlang gleitet und deren Kettenglieder beispielsweise die Standfläche für die Behälter bilden. Eine derartige Anordnung ist einfach zu realisieren, wobei die Förderkette spezialisiert ist auf die Förderfunktion, während die Aufnahmeelemente spezialisiert sind auf die Aufnahmefunktion für die Behälter oder deren Verschlüsse.

Üblicherweise sind derartige Aufnahmeelemente zum Beispiel Plattenelemente, von denen jedes mit dem Endlosantriebselement, zum Beispiel der Förderkette, verbunden ist.

In einer dazu alternativen Ausführungsform können auch die miteinander verbundenen Aufnahmeelemente selbst das Endlosantriebselement bilden. Eine derartige Konstruktion ist zum Beispiel bei Gepäckabgabestationen in Flughäfen bekannt.

Ist die Behälterbehandlungsanlage zumindest teilweise als Neckhandlinganlage ausgeführt, so kann es sich bei dem Endlosförderer auch um eine Förderkette handeln, an welcher die für das Neckhandling erforderlichen Greifelemente zum Greifen der Behälter angeordnet sind.

Folgende Begriffe werden synonym verwendet: Konstruktionselement - Führungsschiene - Führung; gekrümmter Abschnitt einer Führung - Kurvenführung; Markerelement - Markierung - Sensor - Sensorarray;

Die Erfindung wird nachfolgend beispielsweise anhand der schematischen Zeichnung beschrieben. In dieser zeigen:
- Fig. 1a und 1b: eine schematische Aufsicht auf eine intakte und abgenutzte Kurvenführung,
- Fig. 2a und 2b: eine Ansicht gemäß Fig. 1a und 1b mit einer außenseitig angeordneter Markierung im Normalzustand und im abgenutzten Zustand,
- Fig. 3a und 3b: eine Ansicht gemäß Fig. 2a und 2b mit einer innenseitig angeordneten Markierung,
- Fig. 4a: eine Aufsicht auf eine Kurvenführung mit plattenförmigen Aufnahmeelementen und einem Sensorarray, das sich quer zur Transportrichtung der Führung erstreckt und mehrere Sensoren aufweist,
- Fig. 4b: eine teilgeschnittene Seitenansicht III-III der Fig. 3a und
- Fig. 5: eine alternative Ausführungsform einer Sensoreinrichtung gemäß Fig. 4, bei der nur ein optischer Sensor angeordnet ist.

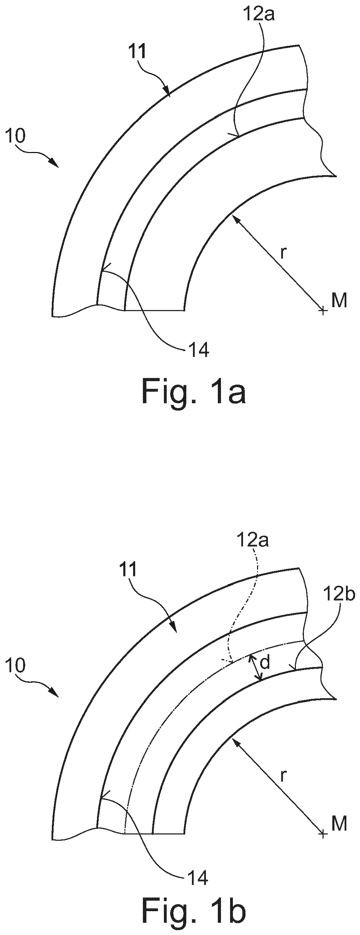

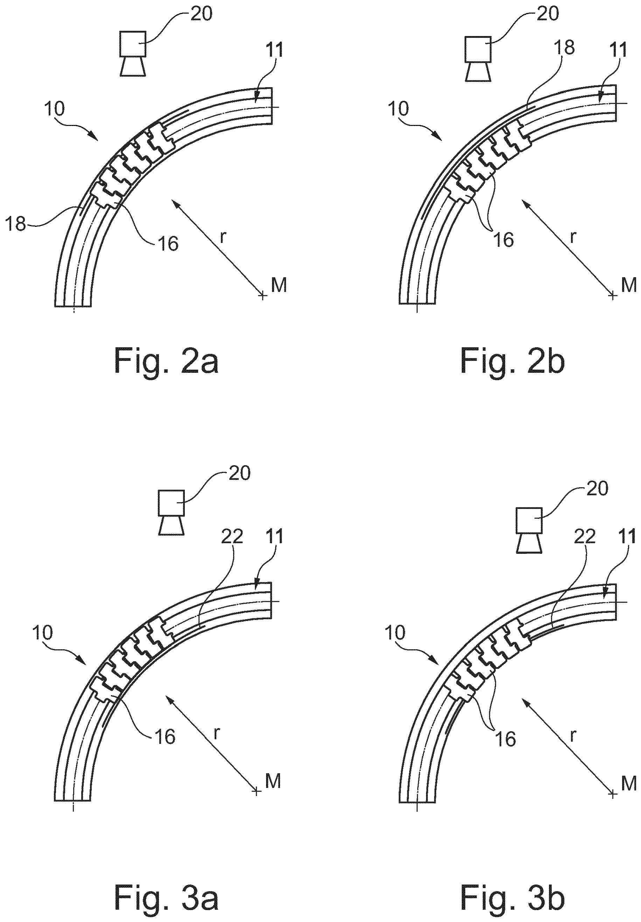

In den Figuren 1a und 1b ist eine Kurvenführung 10 einer Führungsanordnung dargestellt, welche ein Führungsprofil 11 mit einer dem Mittelpunkt M der Kurvenführung zugewandten inneren Führungsfläche 12 als auch mit einer dem Mittelpunkt M abgewandten äußeren Führungsfläche 14 aufweist, zwischen denen ein Endlosförderelement, wie zum Beispiel eine Förderkette geführt sind. In der dargestellten Kurvenführung 10 liegt das Endlosförderelement aufgrund der auftretenden Spannung an der inneren Führungsfläche 12 an, was dazu führen kann, dass sich diese abnutzt (Fig. 1b). So kann sich aufgrund der Abnutzung eine versetzte innere Führungsfläche 12b ergeben, die von ihrer ursprünglichen Lage um den Abstand d radial nach innen zum Kurvenmittelpunkt M der Kurvenführung versetzt ist. Dies führt dazu, dass mit dem Endlosförderelement verbundene Aufnahmeelemente, wie zum Beispiel Platten zum Aufnehmen von Behältern, ebenfalls um den seitlichen Versatz d nach innen wandern, so dass die Position der Behälter auf den zugehörigen Aufnahmeelementen nicht mehr den vorgegebenen Positionen entsprechen. Dies kann zu erheblichen zu Beschädigungen, Produktionsunterbrechungen und/oder Betriebsstörungen führen. Eine derartige detailliert gezeigt Kurvenführung gemäß Fig. 1a und 1b ist in den Fig. 2a und 2b als auch in den Fig. 3a und 3b etwas grober dargestellt.

Die Fig. 2a zeigt die Kurvenführung 10 im intakten Zustand, bei welcher Aufnahmeelemente 16 in Form von Platten zur Aufnahme von Behältern mittig entlang der Kurvenführung entlangfahren. Außenseitig der Führungsflächen 12, 14 ist eine Markierung 18 angeordnet, die entweder visuell oder über eine Kamera/optischen Sensor 20 erfasst werden kann. Ist die innere Führungsfläche 12 nicht abgenutzt, ergibt sich der Verlauf der Aufnahmeelemente 16, wie er in Fig. 2a dargestellt ist. In diesem Fall wird die Markierung 18 durch die darüber laufenden Aufnahmeelemente 16 unterbrochen, so dass sich als Signal in der dem optischen Sensor 20 ein Pulsmuster mit einer der Fördergeschwindigkeit und der Größe der Aufnahmeelemente entsprechenden Frequenz ergibt. Wenn die innere Führungsfläche 12b der Kurvenführung 10 abgenutzt ist, wie es in Fig. 2b gezeigt ist, ergibt sich eine seitlich versetzte Anordnung der Aufnahmeelemente 16. Diese sind relativ zur Kurvenführung 10 nach innen zum Kurvenmittelpunkt M gewandert, so dass die Markierung 16 freigelegt wird und nicht mehr durch die Aufnahmeelemente abgedeckt ist. Eine Kontrollperson oder der Sensor 20 erhält somit ein kontinuierliches Impulsmuster, das der Behälterbehandlungsanlage oder einer Person den Verschleiß der Kurvenführung anzeigt.

Die Fig. 3a und 3b entsprechen exakt den Fig. 2a und 2b mit dem Unterschied, dass die Markierung 22 dort an der Innenseite, das heißt an der dem Mittelpunkt M der Kurve der Kurvenführung 10 mit dem Radius r zugewandten Seite angeordnet ist. Hier erhält der Sensor 20 bei intakter Kurvenführung 10 ein durchgehendes Impulsmuster, während mit zunehmendem Verschleiß der Anlage gemäß Fig. 3b die innere Markierung 22 zunehmend durch die Aufnahmeelemente 16 überdeckt wird, wodurch ein pulsartiges Muster von dem Sensor 20 erfasst wird.

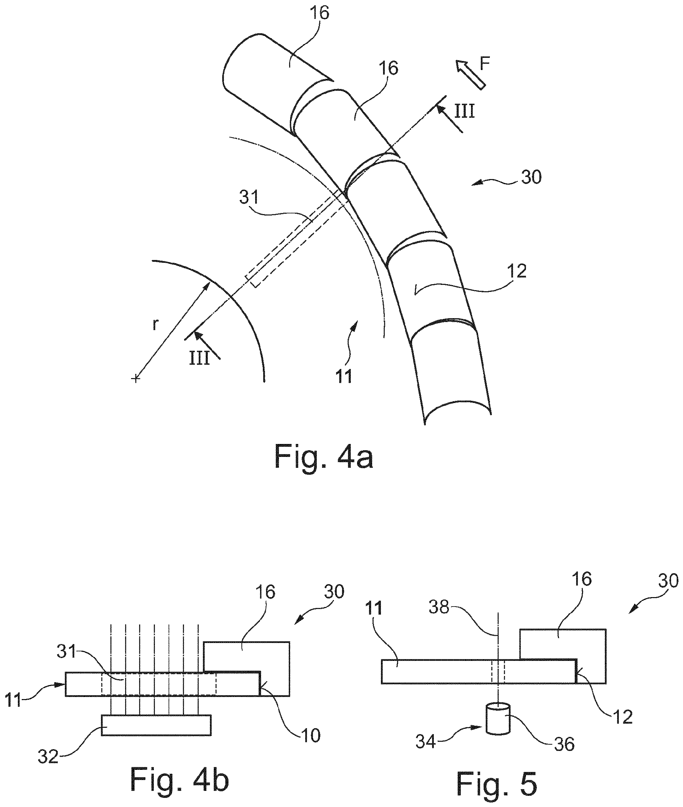

Die Fig. 4a und 4b zeigen eine Kurvenführung 30 mit einer inneren Führungsfläche 12 für die Aufnahmeelemente 16, die in der Art eines Gepäckförderers an einem Flughafen ausgebildet sind. Quer zur Förderrichtung F ist ein Sensorarray 32 angeordnet, das eine Vielzahl von nebeneinander angeordneten Sensorelementen aufweist, die in radialer Richtung r der Kurvenführung 30 nebeneinander angeordnet sind. Mit zunehmender Abnutzung der inneren Führungsfläche 12 geraten die Aufnahmeelemente 16 zur Aufnahme der Behälter in den Erfassungsbereich von zunehmend mehreren Sensorelementen des Sensorarrays 32, wobei die Stärke der Abnutzung der inneren Führungsfläche daran ablesbar ist, wie viele Sensorelemente des Sensorarrays 32 durch das Aufnahmeelement 16 überdeckt werden. Durch das Sensorarray 32 lässt sich somit eine Abnutzung der inneren Führungsfläche 14 vor dem Erreichen eines kritischen Grenzwertes erfassen und auswerten.

Fig. 5 zeigt eine abweichende Sensoreinrichtung 34 mit nur einem Sensor 36, der einen senkrechten Strahl 38 emittiert, der unterbrochen wird, wenn die Aufnahmeelemente 16 aufgrund einer starken Abnutzung der inneren Führungsfläche 12 in den emittierten Strahl 38 des Sensors 36 gelangen. Durch die in Fig. 5 dargestellte Sensoreinrichtung 34 kann somit ein kritischer Grenzwert für einen Verschleiß der Kurvenführung 30 bzw. der inneren Führungsfläche 12 erfasst werden.

Es ist für den Fachmann offensichtlich, dass die oben genannten Ausführungsformen nicht beschränkend sind. Die Erfindung kann im Schutzbereich der nachfolgenden Patentansprüche in beliebiger Weise variiert werden.

### Bezugszeichenliste

- 10: Kurvenführung
- 11: Führungsschiene
- 12: innere Führungsfläche
- 14: äußere Führungsfläche
- 16: Aufnahmeelement
- 18: äußere Markierung
- 20: Kamera - optischer Sensor
- 22: innere Markierung
- 30: Kurvenführung
- 31: Längsloch für Durchtritt von Sensorstrahlen
- 32: Sensorarray mit mehreren Sensorelementen
- 34: Sensoreinrichtung
- 36: optischer Einzelsensor
- 38: Sensorstrahl

## Patentansprüche

1. Behälterbehandlungsanlage, umfassend wenigstens eine Förderanordnung für Behälter oder deren Verschlüsse, welche Förderanordnung wenigstens ein Endlosantriebselement aufweist, das mittels einer Führung geführt ist, als auch Aufnahmeelemente (16) für die Behälter oder deren Verschlüsse, die mit dem Endlosantriebselement in Verbindung stehen, wobei die Führung wenigstens einen Abschnitt (10; 30) mit wenigstens einer Führungsfläche (12, 14) und wenigstens einen gekrümmten Abschnitt (10;30) mit wenigstens einer inneren Führungsfläche (12) aufweist, gegen die das Endlosantriebselement und/oder die Aufnahmeelemente (16) anliegt/en, wobei die Behälterbehandlungsanlage wenigstens ein Markerelement (18; 22; 32; 34) in örtlicher festgelegter Anordnung im gekrümmten Abschnitt (10; 30) der Führung aufweist, welches Markerelement (18; 22; 32; 34) mit wenigstens einem Teil des Endlosantriebselements bzw. der Aufnahmeelemente (16) zur Generierung eines Verschleißsignals zusammenwirkt, wobei das Markerelement (32; 34) ein Sensor ist, der mit der Behälteraufnahme und/oder dem Endlosantriebselement zusammenwirkt, **dadurch gekennzeichnet, dass** der Sensor als Sensorarray (32) mit einer Vielzahl von nebeneinander angeordneten Sensorelementen ausgebildet ist, wobei die Sensorelemente in radialer Richtung r der Kurvenführung (30) nebeneinander angeordnet sind.

2. Behälterbehandlungsanlage nach Anspruch 1, **dadurch gekennzeichnet, dass** der Sensor (18; 22; 32; 34) einen definierten Erfassungsbereich quer zur Förderrichtung des Endlosantriebelements erfasst und ein Signal abgibt, das abhängig von der Lage des Endlosantriebselements/der Aufnahmeelemente in dem Erfassungsbereich ist.

3. Behälterbehandlungsanlage nach Anspruch 1 oder 2, **dadurch gekennzeichnet, dass** der Sensor (32; 34) mit einer Steuerung verbunden ist, um auf den Betrieb der Behälterbehandlungsanlage einzuwirken oder um eine Wartungssignal für eine Überwachungseinheit zu generieren.

4. Behälterbehandlungsanlage nach einem der vorhergehenden Ansprüche, **dadurch gekennzeichnet, dass** das Markerelement (18; 22; 32; 34) in einem mit der Führung verbundenen Konstruktionselement (11) angeordnet ist.

5. Behälterbehandlungsanlage nach einem der vorhergehenden Ansprüche, die als Behälterförderanlage, Behälterfüllanlage, Behälteretikettieranlage, Behälterreinigungsanlage und/oder Verpackungsanlage für Behälter ausgebildet ist.

6. Behälterbehandlungsanlage nach einem der vorhergehenden Ansprüche, **dadurch gekennzeichnet, dass** das Endlosantriebselement eine Förderkette ist, die an der Führungsfläche (12, 14) entlanggleitet und deren Kettenglieder mit den Aufnahmeelementen (16) verbunden sind.

7. Behälterbehandlungsanlage nach einem der vorhergehenden Ansprüche, **dadurch gekennzeichnet, dass** die Aufnahmeelemente (16) Plattenelemente sind, von denen jedes mit dem Endlosantriebselement verbunden ist.

8. Behälterbehandlungsanlage nach einem Ansprüche 1 bis 5, **dadurch gekennzeichnet, dass** die Aufnahmeelemente (16) miteinander zur Bildung des Endlosantriebselements verbunden sind.

9. Behälterbehandlungsanlage nach einem der vorhergehenden Ansprüche, **dadurch gekennzeichnet, dass** das Markerelement bei einer Abnutzung der Führungsfläche durch die Aufnahmeelemente freigelegt oder überdeckt wird.

10. Behälterbehandlungsanlage nach einem der vorhergehenden Ansprüche, **dadurch gekennzeichnet, dass** der gekrümmte Abschnitt (10; 30) der Führung ein Führungsprofil (11) mit einer inneren Führungsfläche (12) und einer äußeren Führungsfläche (14) aufweist.

## Claims

1. Container treatment system, comprising at least one conveyor assembly for containers or closures thereof, said conveyor assembly having at least one endless drive element that is guided by means of a guide, and further having receiving elements (16) for the containers or closures thereof, which are in connection with the endless drive element, wherein the guide has at least one section (10; 30) with at least one guide surface (12, 14) and at least one curved portion (10; 30) with at least one inner guide surface (12), against which the endless drive element and/or the receiving elements (16) is/are in contact, wherein the container treatment system has at least one marker element (18; 22; 32; 34) in a spatially fixed arrangement in the curved portion (10; 30) of the guide, said marker element (18; 22; 32; 34) interacting with at least a part of the endless drive element or of the receiving elements (16) for generating a wear signal, wherein the marker element (32; 34) is sensor which interacts with the container receiver and/or the endless drive element, **characterised in that** the sensor is configured as a sensor array (32) with a plurality of sensor elements arranged adjacent to one another, and wherein the sensor elements are arranged adjacent to one another in the radial direction r of the curved guide (30).

2. Container treatment system according to claim 1, **characterised in that** the sensor (18; 22; 32; 34) detects a defined detection region transverse to the conveying direction of the endless drive element, and issues a signal which is dependent on the location of the endless drive element/receiving elements in the detection region.

3. Container treatment system according to claim 1 or 2, **characterised in that** the sensor (32; 34) is connected to a control device, in order to take effect on the operation of the container treatment system or to generate a maintenance signal for a supervision unit.

4. Container treatment system according to any one of the preceding claims, **characterised in that** the marker element (18; 22; 32; 34) is arranged in a structural element (11) which is connected to the guide.

5. Container treatment system according to any one of the preceding claims, which is configured as a container conveying system, container filling system, container labelling system, container cleaning system, and/or packing system for containers.

6. Container treatment system according to any one of the preceding claims, **characterised in that** the endless drive element is a conveyor chain, which slides along the guide surface (12, 14) and of which the chain links are connected to the receiving elements (16).

7. Container treatment system according to any one of the preceding claims, **characterised in that** the receiving elements (16) are plate elements, each of which is connected to the endless drive element.

8. Container treatment system according to any one of claims 1 to 5, **characterised in that** the receiving elements (16) are connected to one another in order to form the endless drive element.

9. Container treatment system according to any one of the preceding claims, **characterised in that**, in the event of wear of the guide surface by the receiving elements, the marker element is exposed or covered.

10. Container treatment system according to any one of the preceding claims, **characterised in that** the curved portion (10; 30) of the guide comprises a guide profile (11) with an inner guide surface (12) and an outer guide surface (14).

## Revendications

1. Installation de traitement de récipients, comprenant au moins un agencement de transport pour récipients ou leurs bouchons, lequel agencement de transport présente au moins un élément d'entraînement sans fin, qui est guidé au moyen d'un guidage, ainsi que des éléments de réception (16) pour les récipients ou leurs bouchons, qui sont en liaison avec l'élément d'entraînement sans fin, dans laquelle le guidage présente au moins une section (10 ; 30) avec au moins une surface de guidage (12, 14) et au moins une section (10 ; 30) incurvée avec au moins une surface de guidage intérieure (12), contre laquelle l'élément d'entraînement sans fin et/ou les éléments de réception (16) s'appliquent, dans laquelle l'installation de traitement de récipients présente au moins un élément marqueur (18 ; 22 ; 32 ; 34) dans un agencement fixe local dans la section (10 ; 30) incurvée du guidage, lequel élément marqueur (18 ; 22 ; 32 ; 34) coopère avec au moins une partie de l'élément d'entraînement sans fin ou des éléments de réception (16) pour la génération d'un signal d'usure, dans laquelle l'élément marqueur (32 ; 34) est un capteur, qui coopère avec la réception de récipient et/ou l'élément d'entraînement sans fin, **caractérisée en ce que** le capteur est réalisé en tant que réseau de capteurs (32) avec une pluralité d'éléments capteurs agencés les uns à côté des autres, dans laquelle les éléments capteurs sont agencés les uns à côté des autres dans la direction radiale r du guidage incurvé (30).

2. Installation de traitement de récipients selon la revendication 1, **caractérisée en ce que** le capteur (18; 22; 32; 34) détecte une zone de détection définie transversalement au sens de transport de l'élément d'entraînement sans fin et émet un signal qui dépend de la position de l'élément d'entraînement sans fin/des éléments de réception dans la zone de détection.

3. Installation de traitement de récipients selon la revendication 1 ou 2, **caractérisée en ce que** le capteur (32 ; 34) est relié à une commande pour agir sur le fonctionnement de l'installation de traitement de récipients ou pour générer un signal de maintenance pour une unité de surveillance.

4. Installation de traitement de récipients selon l'une quelconque des revendications précédentes, **caractérisée en ce que** l'élément marqueur (18 ; 22 ; 32 ; 34) est agencé dans un élément de construction (11) relié au guidage.

5. Installation de traitement de récipients selon l'une quelconque des revendications précédentes, qui est réalisée en tant qu'installation de transport de récipients, installation de remplissage de récipients, élément d'étiquetage de récipients, installation de nettoyage de récipients et/ou installation d'emballage pour récipients.

6. Installation de traitement de récipients selon l'une quelconque des revendications précédentes, **caractérisée en ce que** l'élément d'entraînement sans fin est une chaîne de transport, qui glisse le long de la surface de guidage (12, 14) et dont les maillons de chaîne sont reliés aux éléments de réception (16).

7. Installation de traitement de récipients selon l'une quelconque des revendications précédentes, **caractérisée en ce que** les éléments de réception (16) sont des éléments de plaque, chacun desquels est relié à l'élément d'entraînement sans fin.

8. Installation de traitement de récipients selon l'une quelconque des revendications 1 à 5, **caractérisée en ce que** les éléments de réception (16) sont reliés les uns aux autres pour la formation de l'élément d'entraînement sans fin.

9. Installation de traitement de récipients selon l'une quelconque des revendications précédentes, **caractérisée en ce que** l'élément marqueur est dégagé ou recouvert lors d'une usure de la surface de guidage par les éléments de réception.

10. Installation de traitement de récipients selon l'une quelconque des revendications précédentes, **caractérisée en ce que** la section (10 ; 30) incurvée du guidage présente un profilé de guidage (11) avec une surface de guidage intérieure (12) et une surface de guidage extérieure (14).
